# EUROPEAN PATENT SPECIFICATION

(11) **EP 0 490 021 B1**
(45) Date of publication and mention of the grant of the patent: **23.11.1994**
(21) Application number: 91104898.1
(22) Date of filing: 27.03.1991
(51) Int. Cl.: F16D 65/10, B22D 19/02

(54) **Composite brake drum for a motor vehicle and method for producing the same**
Bremstrommel aus Verbundmaterial für ein Kraftfahrzeug und Verfahren zu ihrer Herstellung
Tambour de frein composite pour véhicule à moteur et méthode pour sa fabrication

(30) Priority: 07.12.1990 US 623330; 17.12.1990 US 628464
(43) Date of publication of application: 17.06.1992
(73) Proprietor: THE BUDD COMPANY, Troy, MI 48084 (US)
(72) Inventor: Raitzer, Donald Albert, Farmington Hills, Michigan 48336 (US); Twisdom, Raymond Joseph, Warren, Michigan 48093 (US)
(74) Representative: Finck, Dieter, Dr.Ing.

(56) References cited:
- US-A- 2 111 709
- US-A- 2 316 029
- US-A- 3 841 448
- US-A- 4 858 731

## Description

The invention relates to a composite brake drum as disclosed in claim 1.

The invention further relates to a method for producing this brake drum.

Brake drums used for motor vehicles such as heavy duty trucks are typically formed by casting grey iron and machining the casting in areas where precision dimensions and surfaces are required. Although iron brake drums perform satisfactorily, designers of braking systems are constantly striving for enhanced performance, lower cost, increased fatigue life and lighter weight. One particular shortcoming of conventional all-iron drums is their susceptibility to heat checking and crack formation which can ultimately lead to failure of the drum.

As a means for providing an improved brake drum, composite structures are known in which steel is incorporated into an iron brake drum for reinforcement. For example, in accordance with U. S. Patent No. 2,316,029, a bell-shaped stamped sheet metal housing is provided having in iron inner portion centrifugally cast in place to form the friction surface of the drum. Although drums of this construction operate satisfactorily, the location of the steel reinforcing layer is not optimized since the higher bending stresses imposed on the brake drum by the brake shoes are very close to the inside cylindrical surfaces of the braking surface where the reinforcement of steel can be most advantageously used. Moreover, the process of manufacture of such a drum would require specialized machinery and processing steps.

Another approach used in the past is to provide an externally applied reinforcing member such as a steel band as taught by U. S. Patent No. 3,841,448. This approach also requires specialized fabrication equipment and further does not optimally locate the steel reinforcing member. Moreover, the interface surfaces between the drum and reinforcement need to be precision machined and providing a good bond between the parts can be difficult.

A steel wire ring is embedded within in iron brake drum structure according to U. S. Patent No. 2,111,709. Although this structure would likely provide improvements over in all-iron brake drum according to the prior art, the reinforcement provided by the single ring is positioned only to reinforce the open mouth of the brake drum. In addition, no means for positioning the reinforcing member during the molding process is disclosed by this patent. The large cross-sectional area of a single reinforcing ring could further lead to poor bonding between the iron and steel ring due to the heat sink imposed by the ring.

The brake drum according to U.S. Patent No. 4,858,731, employs a cage-like reinforcement assembly made from steel wire which is cast in place to be substantially embedded within a grey iron brake drum. Locating wires are provided to position the reinforcement structure with respect to the mold cavity during casting. Since the steel material of the reinforcing assembly has a considerably higher modulus of elasticity than grey iron, the reinforcement increases the strength of the composite drum structure, thus decreasing mechanical deflection in response to loading. Although this brake drum makes improvements over previous drums, the locator wires of the reinforcement structure locate on both of the two mold halves when positioning the reinforcement structure. In this regard, the locator wires cross the parting line of the mold and present problems in terms of maintaining tolerances in the positioning of the reinforcement structure relative to the machined, loading or friction surface of the drum.

Additionally, the interior ends of the locator wires were required to have precise diameters in that this end was required to contact both mold halves. Furthermore, this prior design tended to cause sand from the casting molds to be scraped free as the two mold halves are put together, leading to defects in the final product.

The problem underlying the invention is to provide an improved composite brake drum in which the reinforcing structure is accurately positioned relative to the machined, loading or friction surface of the brake drum.

Starting out from the composite brake drum of the generic kind this problem is solved in that the ends of the locator wires singly engage a common mold half used to cast said brake drum.

Preferred embodiments of the composite brake drum of the present invention are described in claims 2 to 11.

The composite brake drum of the invention can be produced by a method comprising the following steps:
providing said first casting mold half having a surface defining a portion of a brake drum;
providing said reinforcing structure;
positioning said reinforcing structure in contact with said first mold half to locate said reinforcing structure relative to only said first mold half;
providing said second casting mold half having a surface defining a portion of a brake drum;
locating said second casting mold half relative to said first casting mold half to form a casting mold having a cavity exhibiting surfaces generally defining a portion of said brake drum and substantially encapsulating said reinforcing structure without said second casting mold half contacting said reinforcing structure ;
casting said composite brake drum; and
removing said composite brake drum from said casting mold.

Advantageous kinds of performing this method are described in claims 13 to 19.

The brake drum according to this invention employs a cage-like reinforcement assembly, preferably made from steel wire, which is cast in place to be substantially embedded within a grey iron brake drum. Specifically, the present invention offers an improvement in the locating and positioning of the reinforcement assembly relative to the machined, loading or braking surface of the drum. The locating means of the present invention accurately positions the reinforcement assembly with respect to one mold half during casting and therefore, neither crosses the parting line of the mold nor requires spanning the separation of the mold halves at the locating end. Thus, properly positioned, the reinforcement assembly eliminates the tolerance problems which lead to reduced drum life.

The locating means also allows for easy reforming and fine tuning of the reinforcement assembly prior to mounting within the mold. This further assures accurate positioning of the reinforcement assembly.

The present invention is additionally beneficial in that it allows green casting sand, which has been scraped or dislodged from the mold during positioning of the reinforcement assembly, to be cleared from the mold cavity before the mold is closed for actual casting. With the present reinforcement assembly contacting only one mold half, upon closing of the mold, additional casting sand will not be scraped from the second mold and the mold cavity will remain free from contaminants, upon closing of the mold. With the free or loose sand removed, the porosity of the casting is reduced and the strength of the drum proportionally increased.

The reinforcement assembly also reduces the generation of surface checks and cracks which can propagate and ultimately cause mechanical failure of the brake drum. The increased strength of the composite further enables a reduction in the quantity of iron that is required to produce a brake drum of given strength, thus resulting in a lighter weight brake drum structure. The reinforcement assembly further results in the reinforcing sections being positioned close to the machined friction surfaces of the drum within tolerances required for the most advantageous structural efficiency. The axial aspect of the reinforcing assembly serves to reinforce the brake drum across the entire depth of the friction surface. Significantly, the composite brake drum according to this invention can be fabricated using conventional sand casting processes with minimal variations, thus saving the cost of retooling. Due to the fact that the metal reinforcing sections of this invention are distributed, relatively small diameter wires can be used which in turn enable the wires to be rapidly heated to temperatures near those of the molten iron being poured into the casting mold. Thus, good fusion between the iron and embedded steel reinforcement is promoted and casting cycle time is reduced.

Additional benefits and advantages of the present invention will become apparent to those skilled in the art to which this invention relates from the subsequent description of the preferred embodiments and the appended claims, taken in conjunction with the accompanying drawings.
Figure 1 is a perspective view of a composite motor vehicle brake drum structure constructed in accordance with this invention;
Figure 2 is a cross-sectional view generally showing a portion of the brake drum as it is formed through casting processes;
Figure 3 is a cross-sectional view generally taken along line 3-3 in Figure 1 showing the composite brake drum after finished machining operations;
Figure 4 is a side view of a reinforcement assembly according to this invention; and
Figure 5 is a cross-sectional view taken along line 5-5 of Figure 4 showing a reinforcement structure embodying the principles of the present invention.

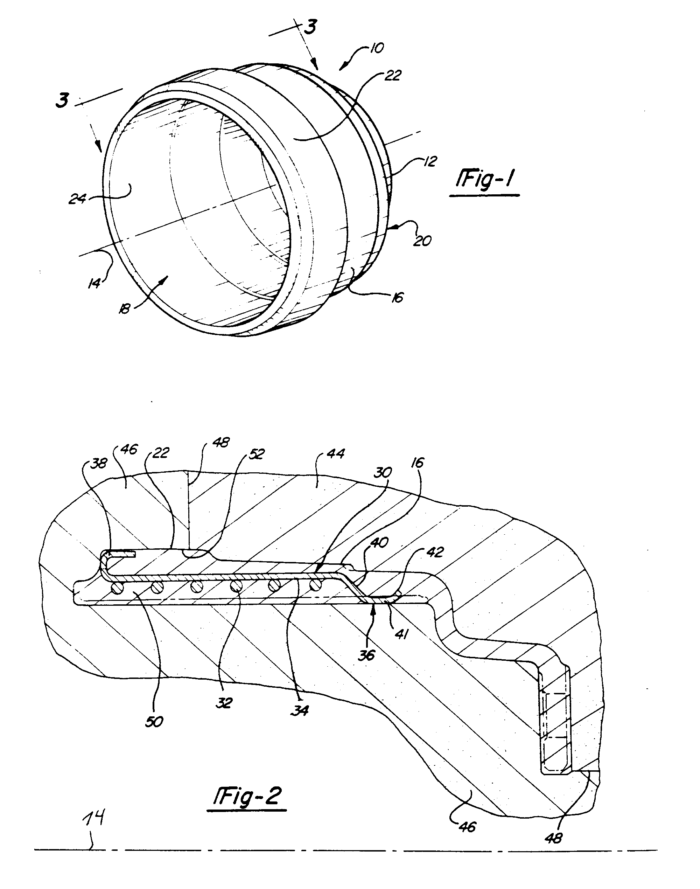

A composite brake drum in accordance with this invention is best shown in Figures 1 through 3 and is generally designated by reference number 10. Drum 10 has a mounting plate portion 12 configured to enable drum 10 to be mounted to a motor vehicle axle structure (not shown) for rotation about an axis of rotation 14. The mounting plate portion 12 merges into a cylindrical side portion 16, thus forming an free end 18 and a closed end 20. A so-called "squeal band" 22 is positioned adjacent the free end 18 and is a radially thickened portion of the brake drum 10. The inside cylindrical friction surface 24 of the drum 10 is engaged by expanding the brake shoes of a conventional drum type braking system.

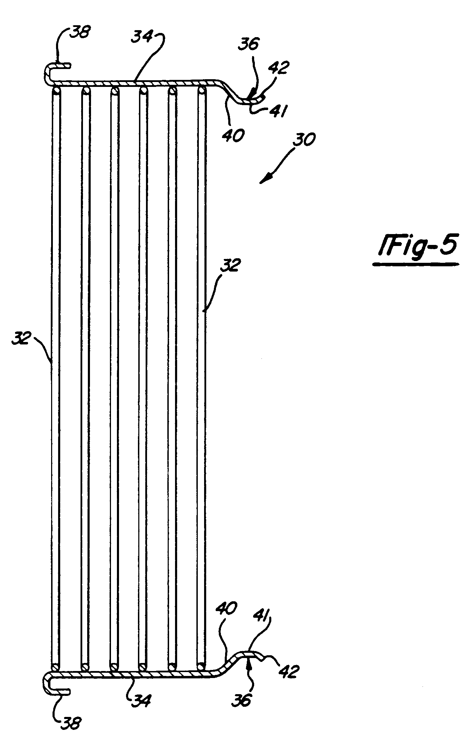

Figures 4 and 5 illustrate the configuration of a reinforcement assembly 30 in accordance with this invention. The reinforcement assembly 30 includes a plurality (six shown) of closed circular wire loops 32 made of steel wire stock. While individual loops 32 are employed in the present embodiment, a single continuously wrapped wire, looped in a general helical shape could also be used.

Axially extending locator wires 34 are provided at circumferentially displaced positions as shown in Figure 4. The locator wires 34 are bonded or otherwise affixed to the loops 32, for example, by brazing, welding, soldering, adhering or by forming them integrally. Locator wires 34 have a radially outwardly turned ring 38 at one axial end and a generally offset contact portion 36 at the opposing end. The offset portion 36 is offset by a riser 40 which extends generally radially inward of the axial extending locator wire 34 toward the axis of rotation 14. A contact segment 41 of the offset portion 36 then continues in a generally axial direction until terminating in an outwardly directed toe or ski-nose 42.

Figure 2 illustrates a process of casting a brake drum 10 according to this invention. As shown, a pair of sand cast molds halves 44 and 46 are provided which are separated at parting line 48 and define a mold cavity 50 whose surface forms the outer shape of the brake drum 10. As shown, the reinforcement assembly 30 is positioned within the mold cavity 50 such that offset portion 36, in particular the axial extension of the contact segment 41, is in contact with only the first or male mold half 46 and the ring 38 is fitted within a pocket 52 formed in the male mold half 46 for developing a portion of the squeal band 22.

In previous brake drums, the position of the reinforcement assembly was engaged from both of the mold halves. This resulted in it being possible for the position of the reinforcement assembly to very along its length from the desired spacing distance, a distance measured from the friction surface, producing a non-uniform strength across the drum. The present invention overcomes this deficiency.

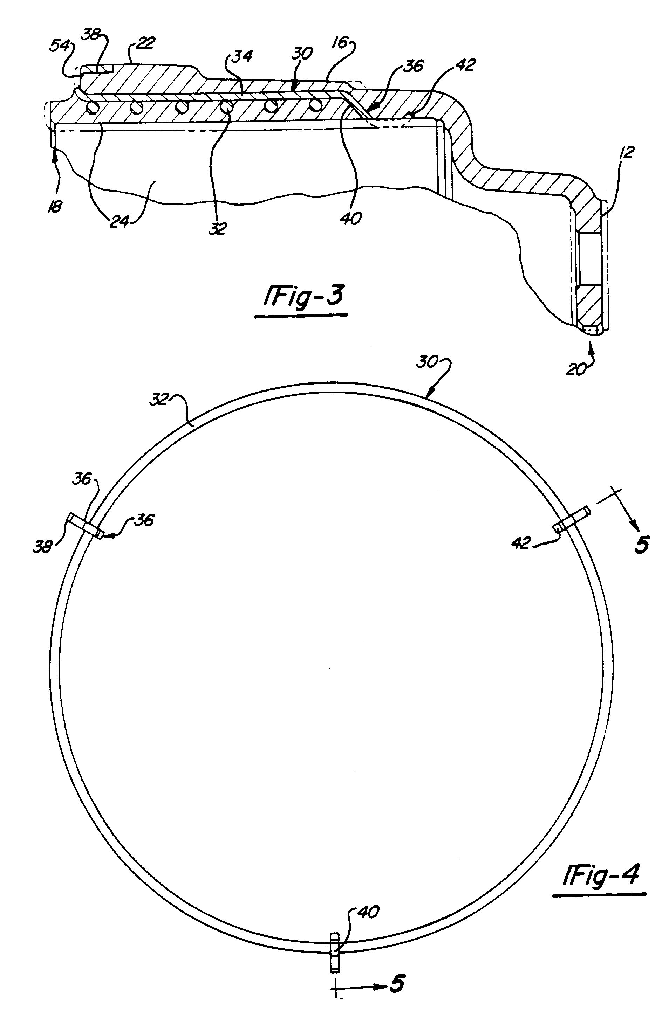

The reinforcement structure 30 is positioned and mounted so as to reference the location and position of the loops 32 only with respect to the male mold half 46. Accordingly, the reinforcement structure 30 is fully positioned prior to the second or female mold half 44 being assembled or closed onto the male mold half 46. By limiting contact of the locating wires 34 to only the male mold half 46, the reinforcement assembly 30 does not traverse the parting line 48 as it is positioned within the mold cavity 50 (i.e. the locator wire 34 does not extend from the first mold half 46 thereafter contacting the second mold half 44). By not crossing the parting line 48, the positioning of the loops 32 is more accurately held relative to the braking surface. As seen in Figures 2 and 3, by referencing the reinforcement assembly 30 to only the male mold half 46, the loops 32 are more accurately positioned relative to the raw cast of the friction surface 24. As such, the friction surface 24 can be machined and finished while maintaining the loops 32 within the acceptable tolerances, thereby providing optimum and equally distributed strength within the composite drum 10.

Since the locating wires 34 engage only the first mold half 46, it is possible to provide for a clean mold cavity 50, one absent of free or loose sand, for casting the drum 10. Whenever the reinforcement assembly 30 contacts the walls of the mold cavity, an amount of mold sand is scraped free at the place of contact. This occurs at each contact area. In the present invention, the reinforcement assembly 30 is positioned over the male mold half 46 and the assembly 30 contacts the male mold half 46 with the opposing ends 36, 38 of the locator wires 34. During the positioning of the reinforcement assembly 30, any amount of sand that would be scraped free is reduced by the elongated contacted segment 41 and ski-nose 42 of the offset portion 36 being connected to the remainder of the locator wire 34 by an axially and radially extending riser 40. As the reinforcement assembly is moved into its proper position, the contact segment 41 is able to slide along the mold half 46 with a rail or sledding action. In this manner, the terminal end or ski-nose 42 prohibits the contact segment 41 from being driven into the mold half 46.

Prior to the positioning of the female mold half 44 over the male mold half 46, any free sand then present in the mold cavity 50 can be cleared to provide a clean mold cavity 50 for improved casting integrity. Typically, the sand is blown clear of the cavity 50. During casting, any free sand remaining within the mold cavity 50 will result in a contaminated casting having increased defects and reduced strength. Since the locator wires 34 will not contact the female mold half 44, the female mold half 44 may be brought into position without any additional sand being released into the cavity 50. Molten iron can now be poured into the mold cavity 50 to substantially embed the reinforcement assembly 30 while readily controlling the porosity to increase the strength of the drum 10.

The offset shape of the offset contact portion 36 also allows for fine tuning or reforming of the reinforcement assembly 30 immediately prior to casting. By positioning the reinforcement assembly 30 over a solid duplicate of the mold, the orientation of the reinforcement assembly 30 can be readily checked and adjusted if necessary.

Figure 3 is a cross-sectional view through the brake drum 10 after finish machining operations are completed. The phantom lines show the outline of the raw casting of the drum 10. As shown, the friction surface 24 is machined to form an accurate inside bore, this involves machining away the contact segment 41. Although iron is a superior material for forming the friction surface 24, the minute cross-sectional area of exposed steel caused by machining into the offset portion 36 does not produce adverse consequences along the interior surface. The rim surface 54 may be machined away causing a portion of the loop 38 to be removed.

In previous designs, the locating ends were required to be embedded into and could disrupt the exterior surface of the cylindrical side portion 16. Since the exterior surface is subjected to extensive stress loading, it is desirable to eliminate the stress concentration induced by the presence of the machined locator ends along that surface. Additionally, the previously mentioned critical diameter is no longer necessary.

The structural benefits provided by the composite brake drum 10, as compared with conventional cast brake drums, are manyfold. The ultimate tensile strength of grey iron is much less than that of steel and, accordingly, the steel of the reinforcement assembly 30 provides enhanced mechanical strength for the drum. The structure is also stiffer since the modulus of elasticity for steel is about twice that of grey iron, i.e. (20,7 to 10,3) x 10¹⁰ Pa or (30 to 15) x 10⁶ psi, respectively. Due to the increased modulus of elasticity of steel, the steel carries a disproportionately high fraction of the total load exerted on the brake drum as compared with its cross-sectional area. Accordingly, when steel is substituted for grey iron within the brake drum 10, the stress in the iron will be reduced and the stiffness of the composite will be enhanced as compared to a drum formed of iron alone. The benefits to be derived from such a composite structure include a reduction in the brake actuator travel of a vehicle and a higher tolerance to brake lining wear. In addition, the reduction in stress retards crack initiation and propagation.

The configuration of the reinforcement assembly 30 in accordance with this invention further provides structural benefits in that the loops 32 are located close to the friction surface 24 and can readily be held within acceptable tolerances. Although stresses are applied onto a brake drum in numerous directions, a significant load is exerted on the cylindrical side portion 16 of the drum 10 in response to the radially outward travel of the brake shoes. Such a load places a tensile stress along the friction surface 24 and a tensile stress on the outer radial surface of the drum side portion 16. The steel making up the loops 32 has excellent tensile strength in extension and, with the positioning of the loops 32 in close proximity to the friction surface 24, such forces are far better restrained than in ordinary grey iron, which has a fairly low extension tensile strength. By positioning the loops 32 substantially equidistantly from the friction surface 24 along the surface's length, the strength of the composite brake drum 10 is uniformly increased across the friction surface 24. Disjunctions in strength could result in the drum 10 exhibiting an increased susceptibility to fatigue.

## Claims

1. A composite brake drum (10) for a motor vehicle comprising :
a mounting plate portion (12) for mounting said drum (10) to a motor vehicle axle structure for rotation about an axis of rotation (14);
a cylindrical side portion (16) having a free end and an end joined to said mounting plate portion (12) and forming an inside cylindrical braking friction surface (24), said cylindrical side portion (16) having a reinforcing structure (30) substantially embedded therein and including at least two loops (32) extending circumferentially about said drum (10) and being coaxial with said axis of rotation (14), said loops (32) also being connected together and axially spaced from one another relative to said axis of rotation (14) by two or more axially extending locator wires (34) having ends (38, 36) for positioning said reinforcing structure (30) within said cylindrical side portion (16) during casting of the brake drum (10), at least one end (36) of said locator wires (34) extending axially beyond said loops (32), characterized in that said ends (38, 36) of said locator wires (34) singly engage a common mold half (46) used to cast said brake drum (10).

2. A composite brake drum as set forth in claim 1 wherein said axially extending end includes a generally concave contact portion (36) for contacting a length of said common mold half (46), said concave contact portion (36) being open in a radially outward direction from said axis of rotation (14).

3. A composite brake drum as set forth in claim 2 wherein said contact portion (36) includes a riser (40) extending radially inward from said loops (32) toward said axis of rotation (14), said riser (40) being connected to a generally axially extending contact segment (41) for contact with said inside cylindrical braking friction surface (24).

4. A composite brake drum as set forth in claim 3 wherein said contacting segment (41) terminates in a radially outwardly extending end (42).

5. A composite brake drum as set forth in one of the claims 1 to 4 wherein one end of said locator wires (34) forms a ring (38) contacting said inside cylindrical braking friction surface (24) and positioning said reinforcing structure (30) in said cylindrical side portion (16).

6. A composite brake drum as set forth in one of the claims 1 to 5 wherein said reinforcing structure (30) includes three locator wires (34) equidistantly spaced about said loops (32).

7. A composite brake drum as set forth in one of the claims 1 to 6 wherein said loops (32) are axially spaced apart such that one of said loops (32) is adjacent said free end (18) and another of said loops (32) is adjacent said end joined to said mounting plate portion (12).

8. A composite brake drum as set forth in claim 7 wherein said reinforcing structure (30) includes six loops (32).

9. A composite brake drum as set forth in one of the claims 1 to 8 wherein said loops (32) are formed steel wire.

10. A composite brake drum as set forth in one of the claims 1 to 9 wherein said locator wires (34) are welded to said loops (32).

11. A composite brake drum as set forth in one of the claims 1 to 10 wherein the common mold half contacted by said ends (38,36) of said locator wires (34) is a male mold half.

12. A method of casting the composite brake drum according to one of the preceding claims, comprising the steps of:
providing said first casting mold half (46) having a surface defining a portion of a brake drum (10);
providing said reinforcing structure (30);
positioning said reinforcing structure (30) in contact with said first mold half (46) to locate said reinforcing structure (30) relative to only said first mold half (46);
providing said second casting mold half (44) having a surface defining a portion of a brake drum (10);
locating said second casting mold half (44) relative to said first casting mold half (46) to form a casting mold having a cavity (50) exhibiting surfaces generally defining a portion of said brake drum (10) and substantially encapsulating said reinforcing structure (30) without said second casting mold half (44) contacting said reinforcing structure (30);
casting said composite brake drum (10) ; and
removing said composite brake drum (10) from said casting mold.

13. The method as set forth in claim 12 further comprising the step of removing loose particles from said first mold surface to clean said first mold surface.

14. The method as set forth in claim 13 wherein said cleaning is performed after positioning said reinforcing structure (30) in contact with said first mold half (46).

15. The method as set forth in claim 13 wherein said cleaning is performed by blowing a blowing medium over said first mold surface.

16. The method as set forth in one of the claims 12 to 15 wherein said first casting mold half (46) is a male mold half.

17. The method as set forth in one of the claims 12 to 16 wherein said second casting mold half (44) is located onto said first casting mold half (46) by movement in a substantially horizontal direction.

18. The method as set forth in one of the claims 12 to 17 wherein said composite brake drum (10) is cast with said axis of rotation (14) being oriented generally horizontally.

19. The method as set forth in claim 18 wherein said reinforcing structure (30) is positioned in contact with said first mold half (46) so that one of said locator wires (34) is oriented substantially vertically downward of said axis of rotation (14).

## Patentansprüche

1. Bremstrommel (10) in Verbundbauweise für ein Kraftfahrzeug
- mit einem Halteplattenabschnitt (12) zum Anbringen der Trommel (10) an einem Kraftfahrzeug-Achsaufbau für eine Drehung um eine Drehachse (14) und
- mit einem zylindrischen Seitenabschnitt (16), der ein freies Ende und ein Ende hat, das mit dem Halteplattenabschnitt (12) verbunden ist und eine innere zylindrische Reibbremsfläche (24) bildet,
- wobei der zylindrische Seitenabschnitt (16) einen Verstärkungsaufbau (30) hat, der im wesentlichen in ihm eingebettet ist und wenigstens zwei Schleifen (32) hat, die sich am Umfang um die Trommel (10) erstrecken und koaxial zur Drehachse (14) sind,
- wobei die Schleifen (32) auch miteinander und axial im Abstand voneinander bezüglich der Drehachse (14) durch zwei oder mehr sich axial erstreckende Positionierdrähte (34) angeordnet sind, die Enden (38, 36) zum Positionieren des Verstärkungsaufbaus (30) in dem zylindrischen Seitenabschnitt (16) während des Gießens der Bremstrommel (10) haben, und
- wobei wenigstens ein Ende (36) der Positionierdrähte (34) sich axial über die Schleifen (32) hinaus erstreckt,
dadurch gekennzeichnet,
- daß die Enden (38, 36) der Positionierdrähte (34) einzeln an einer gemeinsamen Formhälfte (46) angreifen, die zum Gießen der Bremstrommel (10) verwendet wird.

2. Bremstrommel in Verbundbauweise nach Anspruch 1, bei welcher das sich axial erstreckende Ende einen insgesamt konkaven Kontaktabschnitt (36) für den Kontakt mit einem Längenstück der gemeinsamen Formhälfte (46) hat, wobei der konkave Kontaktabschnitt (36) in einer Radialauswärtsrichtung von der Drehachse (14) aus offen ist.

3. Bremstrommel in Verbundbauweise nach Anspruch 2, bei welcher der Kontaktabschnitt (36) einen Stufenstich (40) hat, der sich von den Schleifen (32) radial nach innen zu der Drehachse (14) hin erstreckt und mit einem sich insgesamt axial erstreckenden Kontaktsegment (41) für einen Kontakt mit der inneren zylindrischen Reibbremsfläche (24) verbunden ist.

4. Bremstrommel in Verbundbauweise nach Anspruch 3, bei welcher das Kontaktsegment (41) in einem sich radial nach außen erstreckenden Ende (42) endet.

5. Bremstrommel in Verbundbauweise nach einem der Ansprüche 1 bis 4, bei welcher ein Ende der Positionierdrähte (34) einen Ring (38) bildet, der in Kontakt mit der inneren zylindrischen Reibbremsfläche (24) steht und den Verstärkungsaufbau (30) in dem zylindrischen Seitenabschnitt (16) positioniert.

6. Bremstrommel in Verbundbauweise nach einem der Ansprüche 1 bis 5, bei welcher der Verstärkungsaufbau (30) drei Positionierdrähte (34) aufweist, die in gleichem Abstand um die Schleifen (32) angeordnet sind.

7. Bremstrommel in Verbundbauweise nach einem der Ansprüche 1 bis 6, bei welcher die Schleifen (32) axial im Abstand so angeordnet sind, daß eine der Schleifen (32) an das freie Ende (18) und eine weitere der Schleifen (32) an das Ende angrenzt, das mit dem Halteplattenabschnitt (12) verbunden ist.

8. Bremstrommel in Verbundbauweise nach Anspruch 7, bei welcher der Verstärkungsaufbau (30) sechs Schleifen (32) aufweist.

9. Bremstrommel in Verbundbauweise nach einem der Ansprüche 1 bis 8, bei welcher die Schleifen (32) aus Stahldraht ausgebildet sind.

10. Bremstrommel in Verbundbauweise nach einem der Ansprüche 1 bis 9, bei welcher die Positionierdrähte (34) an die Schleifen (32) angeschweißt sind.

11. Bremstrommel in Verbundbauweise nach einem der Ansprüche 1 bis 10, bei welcher die gemeinsame Formhälfte, mit der die Enden (38, 36) der Positionierdrähte (34) in Kontakt stehen, die männliche Formhälfte ist.

12. Verfahren zum Gießen der Bremstrommel in Verbundbauweise nach einem der vorhergehenden Ansprüche, welches die Schritte aufweist,
- Bereitstellen der ersten Gießformhälfte (46), die eine Oberfläche hat, die einen Abschnitt einer Bremstrommel (10) begrenzt,
- Bereitstellen des Verstärkungsaufbaus (30),
- Positionieren des Verstärkungsaufbaus (30) in Kontakt mit der ersten Formhälfte (46) für das Positionieren des Verstärkungsaufbaus (30) bezüglich lediglich der ersten Formhälfte (46),
- Bereitstellen der zweiten Gießformhälfte (44), die eine Oberfläche hat, die einen Abschnitt einer Bremstrommel (10) begrenzt,
- Anordnen der zweiten Gießformhälfte (44) bezüglich der ersten Gießformhälfte (46) zur Bildung einer Gießform, die einen Hohlraum (50) hat, der Oberflächen aufweist, die insgesamt einen Abschnitt der Bremstrommel (10) begrenzen und den Verstärkungsaufbau (30) im wesentlichen einkapseln, ohne daß die zweite Gießformhälfte (44) in Kontakt mit dem Verstärkungsaufbau (30) kommt,
- Gießen der Bremstrommel (10) in Verbundbauweise und
- Entfernen der Bremstrommel (10) in Verbundbauweise aus der Gießform.

13. Verfahren nach Anspruch 12, welches weiterhin den Schritt aufweist, lose Teilchen aus der ersten Formhälfte zu entfernen, um die erste Formoberfläche zu reinigen.

14. Verfahren nach Anspruch 13, bei welchem das Reinigen durchgeführt wird, nachdem der Verstärkungsaufbau (30) in Kontakt mit der ersten Formhälfte (46) positioniert worden ist.

15. Verfahren nach Anspruch 13, bei welchem das Reinigen durch Blasen eines Blasmediums über die erste Formoberfläche ausgeführt wird.

16. Verfahren nach einem der Ansprüche 12 bis 15, bei welchem die erste Gießformhälfte (46) eine männliche Gießformhälfte ist.

17. Verfahren nach einem der Ansprüche 12 bis 16, bei welchem die zweite Gießformhälfte (44) auf der ersten Gießformhälfte (46) durch Bewegen in einer im wesentlichen horizontalen Richtung angeordnet wird.

18. Verfahren nach einem der Ansprüche 12 bis 17, bei welchem die Bremstrommel (10) mit insgesamt horizontal ausgerichteter Drehachse (14) gegossen wird.

19. Verfahren nach Anspruch 18, bei welchem der Verstärkungsaufbau (30) in Kontakt mit der ersten Formhälfte (46) so positioniert wird, daß einer der Positionierdrähte (34) im wesentlichen vertikal nach unten von der Drehachse (14) ausgerichtet ist.

## Revendications

1. Tambour de frein composite (10) pour véhicule automobile, comprenant:
une partie (12) de plaque de montage destinée au montage dudit tambour (10) sur une structure d'essieu de véhicule automobile, en vue de tourner autour d'un axe de rotation (14);
une partie latérale cylindrique (16) comportant une extrémité libre et une extrémité joignant ladite partie (12) de plaque de montage et formant une surface cylindrique intérieure (24) de frottement de freinage, ladite partie cylindrique latérale (16) comprenant une structure (30) de renfort essentiellement noyée dans celle-ci et comportant au moins deux anneaux (32) s'étendant dans le sens de la circonférence autour dudit tambour (10) et étant coaxiaux audit axe de rotation (14), lesdits anneaux (32) étant également reliés l'un à l'autre et espacés axialement l'un de l'autre, par rapport audit axe de rotation (14), par l'intermédiaire de deux ou de plusieurs fils (34) de positionnement s'étendant axialement, ayant des extrémités (38, 36) destinées à positionner ladite structure de renfort (30) dans ladite partie cylindrique latérale (16) pendant le moulage du tambour de frein (10), l'une au moins (36) des extrémités desdits fils (34) de positionnement s'étendant axialement au-delà desdits anneaux (32),
caractérisé en ce que lesdites extrémités (38, 36) desdits fils (34) de positionnement s'engagent individuellement dans un demi-moule commun (46) employé pour mouler ledit tambour de frein (10).

2. Tambour de frein composite selon la revendication 1, dans lequel ladite extrémité s'étendant axialement comprend une partie de contact globalement concave (36), destinée à entrer en contact avec une longueur dudit demi-moule commun (46), ladite partie concave de contact (36) s'ouvrant dans un sens dirigé radialement vers l'extérieur, à partir dudit axe de rotation (14).

3. Tambour de frein composite selon la revendication 2, dans lequel ladite partie de contact (36) comprend un montant (40) s'étendant radialement vers l'intérieur, à partir desdits anneaux (32), en direction dudit axe de rotation (14), ledit montant (40) étant relié à un segment de contact (41) s'étendant globalement dans un sens axial, destiné à entrer en contact avec ladite surface cylindrique latérale (24) de frottement de freinage.

4. Tambour de frein composite selon la revendication 3, dans lequel ledit segment de contact (41) se termine sous forme d'une extrémité (42) s'étendant radialement vers l'extérieur.

5. Tambour de frein composite selon l'une des revendications 1 à 4, dans lequel une extrémité desdits fils (34) de positionnement forme une boucle (38) qui entre en contact avec ladite surface cylindrique intérieure (24) de frottement de freinage et positionne ladite structure de renfort (30) dans ladite partie cylindrique latérale (16).

6. Tambour de frein composite selon l'une des revendications 1 à 5, dans lequel ladite structure de renfort (30) comprend trois fils (34) de positionnement espacés de façon équidistante autour desdits anneaux (32).

7. Tambour de frein composite selon l'une des revendications 1 à 6, dans lequel lesdits anneaux (32) sont axialement espacés les uns des autres, de façon que l'un desdits anneaux (32) soit contigu à ladite extrémité libre (18) et que l'autre desdits anneaux (32) soit contigu à ladite extrémité que rejoint ladite partie (12) de plaque de montage.

8. Tambour de frein composite selon la revendication 7, dans lequel la structure de renfort (30) comprend six anneaux (32).

9. Tambour de frein composite selon l'une des revendications 1 à 8, dans lequel lesdits anneaux (32) sont en fil d'acier.

10. Tambour de frein composite selon l'une des revendications 1 à 9, dans lequel lesdits fils (34) de positionnement sont soudés sur lesdits anneaux (32).

11. Tambour de frein composite selon l'une des revendications 1 à 10, dans lequel le demi-moule commun, avec lequel entrent en contact lesdites extrémités (38, 36) desdits fils (34) de positionnement, est un demi-moule mâle.

12. Procédé de moulage d'un tambour de frein composite selon l'une des revendications précédentes, comprenant les étapes consistant à:
prévoir un premier demi-moule (46) de moulage ayant une surface définissant une partie d'un tambour de frein (10);
prévoir ladite structure de renfort (30);
mettre en place ladite structure de renfort (30), en contact avec ledit premier demi-moule (46), de manière à positionner ladite structure de renfort (30) par rapport audit premier demi-moule (46) seulement;
prévoir ledit second demi-moule (44) de moulage ayant une surface définissant une partie d'un tambour de frein (10); positionner ledit second demi-moule (44) de moulage par rapport audit premier demi-moule (46) de moulage de manière à former un moule de moulage ayant une cavité (50) présentant des surfaces définissant globalement une partie dudit tambour de frein (10) et renfermant, pour l'essentiel, ladite structure de renfort (30) sans que ledit second demi-moule (44) de moulage entre en contact avec ladite structure de renfort (30);
mouler ledit tambour de frein composite (10); et
retirer ledit tambour de frein composite (10) dudit moule de moulage.

13. Procédé selon la revendication 12, comprenant en outre l'étape consistant à enlever les particules libres de ladite première surface du moule de manière à nettoyer ladite première surface du moule.

14. Procédé selon la revendication 13, dans lequel ledit nettoyage est effectué après le positionnement de ladite structure de renfort (30) en contact avec ledit premier demi-moule (46).

15. Procédé selon la revendication 13, dans lequel ledit nettoyage est effectué en soufflant un fluide de soufflage sur ladite première surface du moule.

16. Procédé selon l'une des revendications 12 à 15, dans lequel ledit premier demi-moule (46) de moulage est un demi-moule mâle.

17. Procédé selon l'une des revendications 12 à 16, dans lequel ledit second demi-moule (44) de moulage est placé sur ledit premier demi-moule (46) par un mouvement effectué dans une direction sensiblement horizontale.

18. Procédé selon l'une des revendications 12 à 17, dans lequel ledit tambour de frein composite (10) est moulé lorsque ledit axe de rotation (14) est orienté globalement horizontalement.

19. Procédé selon la revendication 18, dans lequel ladite structure de renfort (30) est placée en contact avec ledit premier demi-moule (46), de manière que l'un desdits fils (34) de positionnement soit orienté essentiellement verticalement vers la bas par rapport audit axe de rotation (14).
